# EUROPEAN PATENT SPECIFICATION

(11) **EP 3 867 041 B1**
(45) Date of publication and mention of the grant of the patent: **28.02.2024**
(21) Application number: 19927205.5
(22) Date of filing: 30.04.2019
(51) Int. Cl.: B29C 64/25, B29C 64/295, B29C 64/393, B33Y 30/00, B33Y 50/02, B22F 10/85, B22F 12/17, B29C 64/259, B29C 64/364

(54) **ADDITIVE MANUFACTURING SYSTEMS**
SYSTEME ZUR GENERATIVEN FERTIGUNG
SYSTÈMES DE FABRICATION ADDITIVE

(43) Date of publication of application: 25.08.2021
(73) Proprietor: Hewlett-Packard Development Company, L.P., Spring TX 77389 (US)
(72) Inventor: FERRIS ROIG, Cristian, 08174 Sant Cugat del Valles (ES); VALLES GONZALEZ, Marius, 08174 Sant Cugat del Valles (ES); MOSQUERA DONATE, Gerard, 08174 Sant Cugat del Valles (ES)
(74) Representative: Haseltine Lake Kempner LLP
(86) International application number: PCT/US2019/029838
(87) International publication number: WO 2020/222787

(56) References cited:
- EP-A1- 3 395 481
- WO-A1-2018/140034
- WO-A1-2019/058421
- WO-A1-2019/078870
- US-A1- 2013 101 728
- US-A1- 2013 329 243
- US-A1- 2016 221 262
- US-A1- 2018 200 790

## Description

### BACKGROUND

Additive manufacturing is transforming classical part manufacturing processes, including removing many current limitations, leading to more complex geometries using a simpler manufacturing process.

The quality of an additively manufactured product can be influenced positively or negatively by prevailing environmental conditions within an additive manufacturing system used to produce the product.
US 2018/200790 discloses systems and tooling for cooling components during additive manufacturing. A build plate supports layers of powdered materials as they are positioned and selectively fused to create the component. The build plate defines a build surface and the build surface retracts in a working direction opposite a build direction for the component. At least one vertical cooling structure is provided perpendicular to the build plate and protruding from the build plate as the build surface retracts. The vertical cooling structure cools at least a portion of the component through unfused powdered materials between the vertical cooling structure and the component.
EP 3 395 481 discloses a powder bed fusion apparatus in which an object is built in a layer-by-layer manner, the apparatus comprising a build sleeve, a build platform for supporting a powder bed, the build platform lowerable in the build sleeve and a least one channel integrated into the build sleeve for transporting a heat transfer liquid to cool or heat a portion of the build sleeve surrounding the powder bed.

### BRIEF DESCRIPTION OF THE DRAWINGS

Example implementations will now be described, by way of example, with reference to the accompanying drawings in which:
Figure 1 is a schematic view of a 3-dimensional (3D) printing system according to example implementations;
Figure 2 illustrates a schematic view of a build chamber according to example implementations;
Figure 3 depicts a number of thermal elements and control electronics according to example implementations;
Figure 4 shows a sectional view of the thermal elements and control electronics of figure 3;
Figure 5 shows a schematic view of the build chamber according to example implementations;
Figure 6 depicts a temperature profile according to example implementations;
Figure 7 illustrates a flowchart according to example implementations;
Figure 8 depicts a flowchart according to example implementations;
Figure 9 shows a schematic view of the 3D printing system according to example implementations; and
Figure 10 illustrates machine-readable storage storing machine-executable instructions according to example implementations.

### DETAILED DESCRIPTION

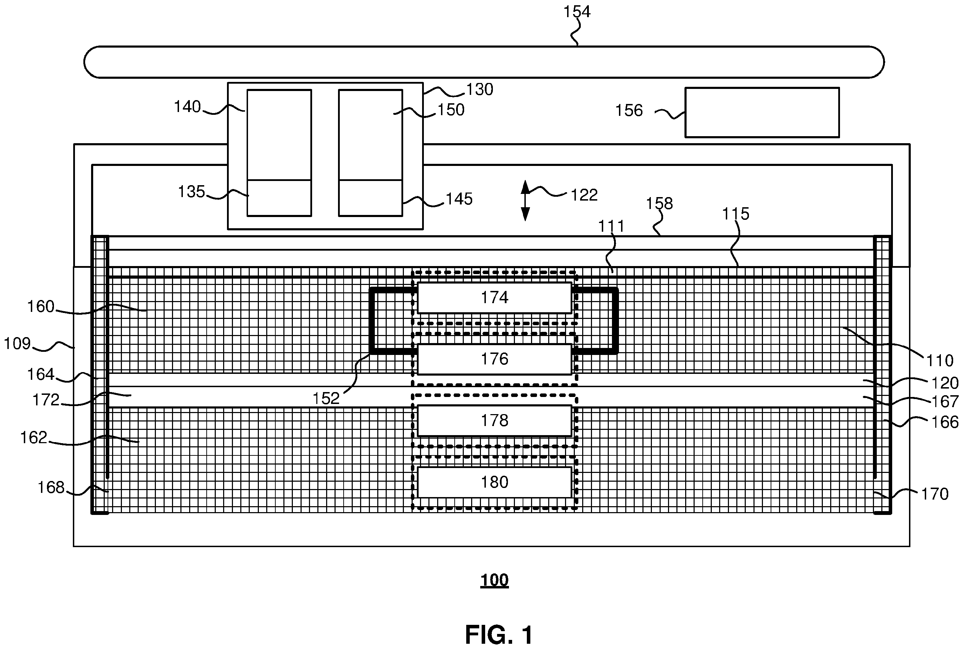

Figure 1 shows an example of a sectional view of a 3D printing system 100. The system 100 may include a removable build unit 109 comprising a build chamber 110 within which layers of build material 111 can be accumulated to form a build material bed 115. The build unit 109 can alternatively form a fixed part of the system 100 as opposed to being removable. The build material 111 can be, for example, a powder. In the example shown, the build chamber 110 has a build platform 120. The build platform is provided to bear layers, or a volume, of build material to be selectively solidified to form each layer of a 3D object or part to be printed, that is, the build platform supports the build material bed. The 3D printing system 100 is an example implementation of an additive manufacturing system for manufacturing a 3D object from a build material. The build platform 120 is reciprocally movable in both directions of an axis 122.

Examples of one or more build materials can comprise at least one of a polymer powder, or other plastic powder, a metal powder, a ceramic powder or other powder-like material, or lengths or units of such build material, taken jointly and severally in any and all permutations. The lengths or units of build material can comprise fibres, filaments or threads of build material. The fibres, filaments or threads of build material can be formed from, or otherwise derived from, longer or larger units of build material. The build material can be responsive to heat, or a binding agent, to fuse, or bind, adjacent particles of build material. For example, the build material to be fused can be defined with a printing liquid. The printing liquid can be arranged to couple heat to the build material to cause adjacent build material to fuse together. Additionally, or alternatively, the printing liquid may cause or influence chemical binding of the build material. Furthermore, the chemically bound build material can be subjected to heat to fuse the chemically bound build material together. For example, build material can comprise polypropylene, polyester, polyamide such as, for example, PA11, PA12, polylactic acid, thermoplastic polyurethane (TPU) or the like.

The system 100 can also comprise a printhead carriage 130 that has one or more than one inkjet pen for printing liquids. For example, the system 100 can provide a first inkjet pen 135 in communication with a first reservoir 140 of a first printing liquid. Example implementations can be realised in which the printing liquid is an energy absorbing fusing agent. The system can also provide a second inkjet pen 145. The second inkjet pen 145 can be in communication with a second reservoir 150 of a second printing liquid. Example implementations can be realised in which the second printing liquid can be a detailing agent.

At least one, or both, of the first and second inkjet pens 135 and 145 can be used to influence use of the build material to construct a 3D printed object 152. For example, the fusing agent printed via the pen 135 can define the build material to be fused.

After the fusing agent has been printed onto a layer of build material, a heater such as, for example, a fusing lamp 154, can be used to heat the build material. Build material bearing fusing agent absorbs more energy than build material without fusing agent such the former agglomerates whereas the latter does not fuse. The fusing lamp 154 is an example implementation of a heat source.

The detailing agent can be used to improve the definition between fused and unfused portions of build material during heating. The detailing agent is printed onto build material intended to remain unfused that is adjacent to build material intended to be fused. The detailing agent influences the temperature of the build material onto which it is printed to inhibit fusing of that build material. The detailing agent can constrain thermal bleed, that is, it can constrain the inadvertent spread of heat to build material intended to remain unfused.

To achieve good selectivity between the fused and unfused portions of a build material layer, the fusing agent can absorb enough energy to increase the temperature of any build material coated or printed with the fusing agent above the melting or softening point of the build material, while unprinted portions of the layer of build material remain below the melting or softening point.

A controller 156 controls the operation of the 3D printer 100. The controller 156 can comprise one or more than one processor for executing machine-readable or machine-executable instructions for realizing any and all examples herein. Accordingly, examples provide at least one or more than one of circuitry, hardware or software, taken jointly and severally in any and all permutations, for implementing such a controller 156 to implement or execute any such instructions. The controller 156 is arranged to implement any control and/or any methods described herein.

The build material 111 is deposited via a recoater 158. The recoater 158 is arranged to deposit a layer of build material, such as layer 111, during a traversal of the build platform 120. Layer 111 is an example of such a layer of build material. The recoater 158 moves in a reciprocating manner depositing build material in a direction normal to the plane of figure 1.

The build chamber 110 is divided into two portions by the build platform 120; namely, an upper portion or chamber 160 and a lower portion or chamber 162. As the 3D product 152 is progressively printed, the build platform 120 descends through the build chamber in a direction of the axis 122. Fresh unfused supply build material is stored in the lower portion 162 of the build chamber 110 and is transported to the recoater 158 via a pair of channels 164 and 166. The lower portion 162 containing the unfused supply build material can be initialized or filled to a predetermined level 167. The unfused supply build material enters the channels 164 and 166 via respective apertures 168 and 170. At least one, or both, of the predetermined level 167 or rate of use of build material can be such as a gap or volume 172 exists beneath the build platform 120.

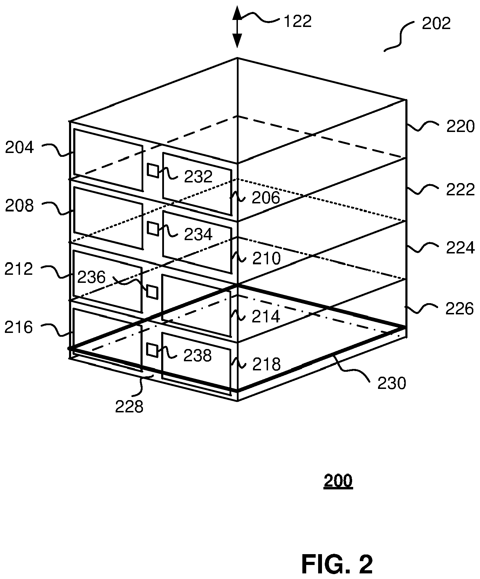

Also shown in figure 1 is a plurality of thermal elements 174 to 180. The thermal elements 174 to 180 have respective regions of influence, depicted by the dashed lines surrounding the thermal elements 174 to 180. The thermal elements 174 to 180 are arranged to influence the temperature of at least one, or both, of the unfused or fused build material within the upper portion 160 of the build chamber 110. Four such thermal elements 174 to 180 have been depicted and the thermal elements are shown as influencing the temperature of just a selected portion of the fused and unfused build material above the build platform 120 to preserve the clarity of the figure for explanation purposes. Example implementations can be realised in which any given wall of the build chamber 115 comprises multiple thermal elements disposed in the direction of the axis 122 of a direction of movement of the build platform. Furthermore, example implementations can be, additionally or alternatively, realised in which any given wall of the build chamber 115 comprises multiple thermal elements disposed in one or more than one direction orthogonal to the axis 122. The thermal elements 174 to 180 are described in more detail with reference to figure 2. Any or all example implementations described herein can provide for the axis 122 being vertical such that at least two or more of the thermal elements are vertically disposed relative to one another.

Referring to figure 2, there is shown a view 200 of a build chamber 202 comprising thermal elements 204 to 218 according to example implementations. The thermal elements 204 to 218 can be example implementations of the above-described thermal elements 174 to 180. The build chamber 202 is an example of the build chamber 110. The thermal elements can be heaters arranged to influence the temperature of the build chamber 202. The thermal elements 204 to 218 are arranged in groups or sets. A group or set of thermal elements is arranged to influence the temperature of a respective zone or volume of the build chamber. Such a respective zone or volume is an example of the above-described regions of influence depicted by the dashed lines surrounding the thermal elements 174 to 180. In the example implementation the build chamber 202 is arranged into at least four zones or volumes. Each zone or region is shown as being influenced by a pair of thermal elements. For example, a first zone or volume 220 is associated with a first pair of thermal elements 204 to 206, a second zone or volume 222 is associated with a second pair of thermal elements 208 to 210, a third zone or volume 224 is associated with a third pair of thermal elements 212 to 214 and a fourth zone or volume 226 associated with a fourth pair of thermal elements 216 to 218. Such zones or volumes are example implementations of one or more respective region of the build chamber.

Although the example implementation has been shown as having thermal elements disposed on the front wall 228 of the build chamber 202, example implementations can be realised in which the thermal elements are disposed on other walls of the build chamber, in addition, or as alternatives, to being disposed on the front wall 228. Example implementations can be realised in which the build chamber has a number of walls. Two or more than two thermal elements can be disposed on one or more than one wall of the number of walls. Two or more than two thermal elements can disposed on a set of walls of the number of walls. The set of walls can comprise any number of the walls. Example implementations can be realised in which the set of walls comprises at least a single wall, at least a pair of walls, at least three walls, at least four walls, all walls or some other number of walls according to the number of walls of the build chamber 202. Example implementations can be realised in which at least one, or both, of the distribution or operation of the one or more than one thermal element is arranged to provide at least one, or both, of a predetermined thermal environment or a uniform thermal environment within at least one or more than one predetermined zone or volume of the build chamber 202, or within a sub-zone or sub-volume of the at least one or more than one predetermined zone or volume. By operating the thermal elements selectively, according to where temperature control is needed, that is, within the volume containing the fused build material, example implementations can be realised in which part of a zone or volume is thermally managed as opposed to the whole of such a zone or volume, which can save energy, which can have the benefit that unfused build material within the upper portion or chamber 160 of the build material can be protected from temperatures that would adversely affect such unfused build material.

Therefore, example implementations can be realised in which any one or more than one, or a selected sub-set, or all, of the zones or volumes can have one or more than one thermal element. Example implementations can be realised in which any one or more than one, or a selected sub-set, or all, of the zones or volumes can have a plurality of thermal elements.

The example implementation depicted in figure 2 comprises a predetermined number of zones or volumes 220 to 226. In the example shown, four such zones or volumes are provided. Example implementations are not limited to such a predetermined number of zones or volumes. Implementations can provide some other number of zones or volumes according to a target or desired resolution or granularity of control over the temperature within the build chamber. Increasing the number of zones or volumes will provide a finer resolution of control whereas decreasing the number of zones or volumes will provide a coarser resolution of control. At least in part, the number of zones or volumes in a given implementation is related to the number of levels thermal elements in the direction of the axis 122, that is, a direction normal to the plane of the build platform, or to at least one, or both, of the size and distribution of the thermal elements. Additionally, example implementations can be realised in one or more than one thermal element is provided transversely, that is, in direction parallel to the plane of the build platform, which is orthogonal to the axis 122.

Also shown in figure 2 is a build platform 230. It can be appreciated that the build platform 230 has been shown as being in the fourth zone 226. The build platform is an example of the build platform 120.

As the build platform 230 progressively descends within the build chamber 202 due to the layer-by-layer construction of a 3D printed object such as object 152 shown in figure 1, the build chamber will progressively fill with a combination of unfused build material and fused build material; the latter being the 3D printed object under construction. As a zone or region such as the above zones or regions 220 to 226 contain fused or unfused build material, corresponding thermal elements within one or more than one zone or volume containing such build material will be controlled or otherwise operated to influence the temperature of such build material.

Influencing or otherwise controlling the temperature of the build material within a zone or volume provides control over a predetermined characteristic of the 3D object under construction. The predetermined characteristic can comprise at least the rate of cooling of the 3D printed object. Therefore, as the build platform 120 bearing the 3D object under construction enters a zone or volume, the respective one or more than one thermal element is controlled to influence the predetermined characteristic of the 3D object under construction. Consequently, each set of thermal elements maintains a respective zone or volume of fused build material under a predetermined environmental condition or state such as, for example, a predetermined temperature.

Example implementations can be realised in which the thermal elements are controlled in a closed-loop or feedback manner. Suitably, one or more than one sensor can be provided to monitor a predetermined characteristic of the build chamber 110. The predetermined characteristic of the build chamber can be the temperature within the build chamber. The one or more than one sensor can, therefore, comprise a temperature sensor. In the example depicted in figure 2, a number of sensors 232 to 238 are shown. Each zone or volume 220 to 228 shown has at least one respective sensor 232 to 238. Example implementations can be provided in which one or more than one zone or volume can comprise more than one sensor.

The thermal elements 204 to 218 and sensors 232 to 238 as shown on the front wall 228 of the build chamber 202 can also be provided on any one or more than one wall of the build chamber 202. The thermal elements 204 to 218 and sensors 232 to 238 provided on such other wall or walls can have the same spatial distribution, or can have a different spatial distribution, as the thermal elements 204 to 218 and sensors 232 to 238 on the front wall 228.

The thermal elements 204 to 218 can be realised using planar thermal elements such as, for example, silicone rubber heaters or mica ceramic heaters.

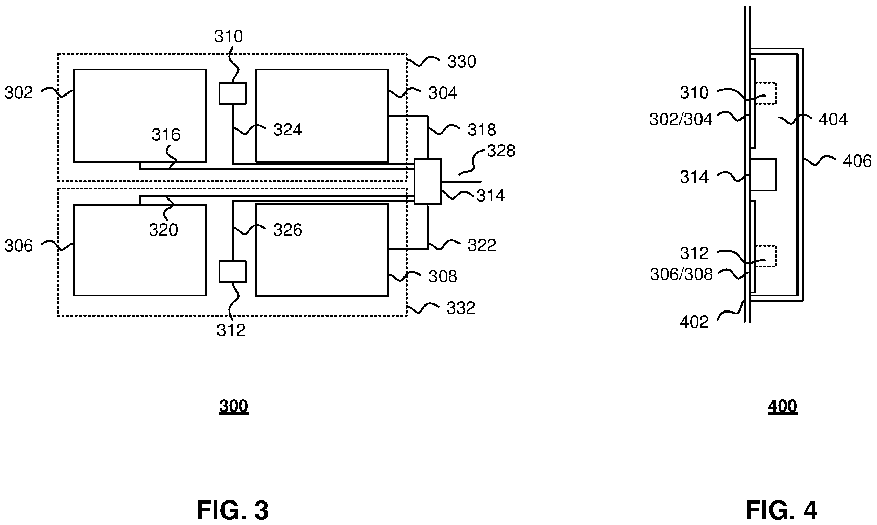

Referring to figure 3, there is shown a view 300 of an arrangement of a plurality of thermal elements 302 to 308 and respective sensors 310 and 312. The thermal elements and sensors can be examples of any of the above described thermal elements 204 to 218 and sensors 232 to 238. At least one, or both, of the thermal elements 302 to 308 or sensors 310 to 312 are operable in response to a controller 314. The controller 314 can be a processor or other control device, such as, for example, a microcontroller. Although the controller 314 has been schematically shown as being relatively proximal to the thermal elements 302 to 308, example implementations can be realised in which the controller is disposed relatively distal to the thermal elements 302 to 308. For example, the controller 314 could be positioned so that it is not adversely affected by the thermal elements when operating.

Furthermore, the controller 314 has been depicted as controlling a predetermined number of thermal elements 302 to 308. In the example shown, the predetermined number of thermal elements 302 to 308 comprises four thermal elements. However, implementations are not limited to such a predetermined number of thermal elements 302 to 308. Example implementations can be realised in which the controller 314 controls some other number or set of thermal elements. The other number or set of thermal elements can comprise one or more than one thermal element associated with a respective zone or volume, a subset of all thermal elements associated with a respective zone or volume or all thermal elements associated with a respective zone or volume.

The controller 314 is arranged to output control signals to or to receive signals from at least one, or both, of one or more than one of the thermal elements 302 to 208 or one or more than one of the sensors 310 to 312 via respective control lines 316 to 322 for the thermal elements and control lines 324 and 326 for the sensors. The controller 314 can also comprise a communication line or bus 328 for communicating with a further controller (not shown). The further controller can, for example, control or otherwise orchestrate the operation of at least thermal elements and sensors of the build chamber as a whole, or control or orchestrate the operation of, or at least part of the operation of, the 3D printer 100 as a whole. The controller 156 can be an example of such a further controller.

The controller 314 can activate or otherwise operate the thermal elements 302 to 308 either individually, that is, separately or jointly with one or more than one other thermal element of the thermal elements. Therefore, for example, as the build platform 120 or 230 descends, a first set 330 of the thermal elements 302 to 304 can be activated first to influence the temperature within a respective zone or volume, until the build platform 120 or 230 descends into a subsequent zone or volume associated with a second set 332 of thermal elements 306 to 308 whereupon the thermal elements 306 to 308 within that second set 332 are activated to influence the temperature within a respective zone or volume. The two sets 330 and 332 could form, for example, the thermals elements for controlling the temperature of any two adjacent zones or volumes of the above-described zones or volumes 220 to 226.

Referring to figure 4, there is shown a view 400 of the arrangement of thermal elements 302 to 308 and sensors 310 to 312 mounted to a wall 402 of the build chamber 202. At least one, or both, of the thermal sensors 302 to 308 and sensors 310 to 312, are embedded in, or shielded by, a respective layer of insulation 404. The respective layer of insulation 404 can be held in place by a housing 406.

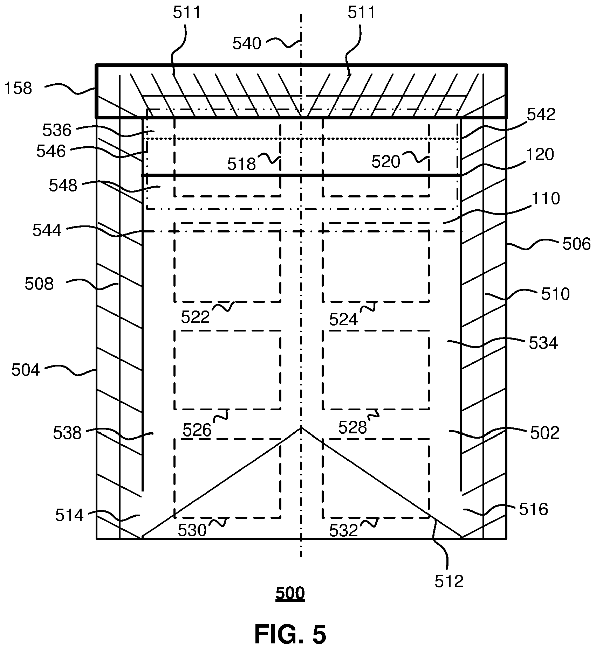

Referring to figure 5, there is shown a view 500 of a portion of the printer 100 showing the build chamber 110 and the build platform 120 or 230. Also shown is the recoater 158. The recoater 158 is fed with unfused build material 502 that is stored within the build chamber 110 below the build platform 120. The unfused build material 502 is routed to the recoater 158 via at least one channel. The unfused build material 502 is an example of the above-described unfused supply build material. The example implementation shown uses at least two channels 504 and 506. The channels 504 and 506 can be examples of the above-described channels 164 and 166. The at least one channel is arranged to transport the unfused build material 502 from the build chamber 110 to the recoater 158 using at least one transport mechanism. In the example implementation shown, the at least one transport mechanism comprises a pair of Archimedes screws 508 and 510 operable to feed the recoater 158 with unfused supply build material for subsequent distribution and use in constructing the 3D object 152. The recoater 158 can also contain at least one transport mechanism for distributing the unfused supply build material throughout or across the recoater 158 for subsequent depositing as a layer of build material. The at least one transport mechanism of the recoater 158 can comprise a pair of Archimedes screws 511.

The build chamber 110 can comprise a guide 512 that is arranged to direct unfused supply build material towards at least one aperture that feds the at least one channel. In the example implementation shown, the guide 512 is arranged to direct unfused supply build material to at least a pair of apertures 514 and 516 that feed respective channels 504 and 506 of the at least two channels. The apertures 514 and 516 are examples of the above-described apertures 168 and 170. The channels 504 and 506 are examples of the above-described channels 164 and 166.

Also shown in figure 5 is a number of thermal elements 518 to 532 embedded in, or associated with, a far wall 534 of the build chamber 110, which are shown using dashed lines. The thermal elements 518 to 532 are example implementations of any of the thermal elements described herein. Not shown are associated sensors or corresponding controllers for the thermal elements 518 to 532.

As described above, the build platform 120 divides the build chamber 110 into an upper chamber or portion 536 and a lower chamber or portion 538. The upper 536 and lower 538 portions are examples of the above described upper 160 and lower 162 portions. The upper chamber 536 is used to house the layers of fused build material as the 3D product is constructed, that is, it is used to house the fused and unfused build material resulting from multiple depositions of build material. The fused and unfused build material contained within the upper chamber 536 is known as the cake. The lower chamber 538, as previously indicated, contains the unfused supply build material 502.

The build platform 120 can move in a reciprocating manner along an axis 540. The build platform 120 descends progressively downwards in the direction defined by the axis 540 as the 3D product is produced layer-by-layer. The axis 540 is an example of the above-described axis 122.

Although the thermal elements are shown as being embedded in, or otherwise associated with, the far or rear wall 534, example implementations are not limited to such as arrangement. Example implementations can be realised in which two, three, four or more walls of the build chamber 110 bear such thermal elements 518 to 532. Example implementations can be realised in which the build chamber 110 comprises four walls that bear such respective thermal elements 518 to 532.

Also shown in figure 5 is a threshold marker 542 that schematically depicts the depth to which heat from the printer 100 such as, for example the heater or lamp 154 maintains the cake above a predetermined temperature.

Figure 5 also depicts an unfused supply build material threshold or level 544 reflecting a current fill-level of the unfused supply build material within the lower portion 538 of the build chamber. The level 544 is an example of the above described predetermined level 167. The thermal elements 518 and 520 are depicted as having a respective zone or volume of influence 546. The zone or volume of influence 546 can be an example implementation of the above-described zones or volumes 220 to 226. The zone or volume of influence 546 does not extend to the current fill-level of the unfused supply build material 502. However, example implementations can be realised in which the zone or volume of influence 546 does, at least initially, extend to the current fill-level of the unfused supply build material 502. As the unfused supply build material is progressively used, the gap or volume 548 immediately beneath the build platform 120 is at least maintained or increases. The variation in the gap or volume 548 beneath the build platform 120 can arise due to a difference in density between unfused supply build material 502 and fused build material.

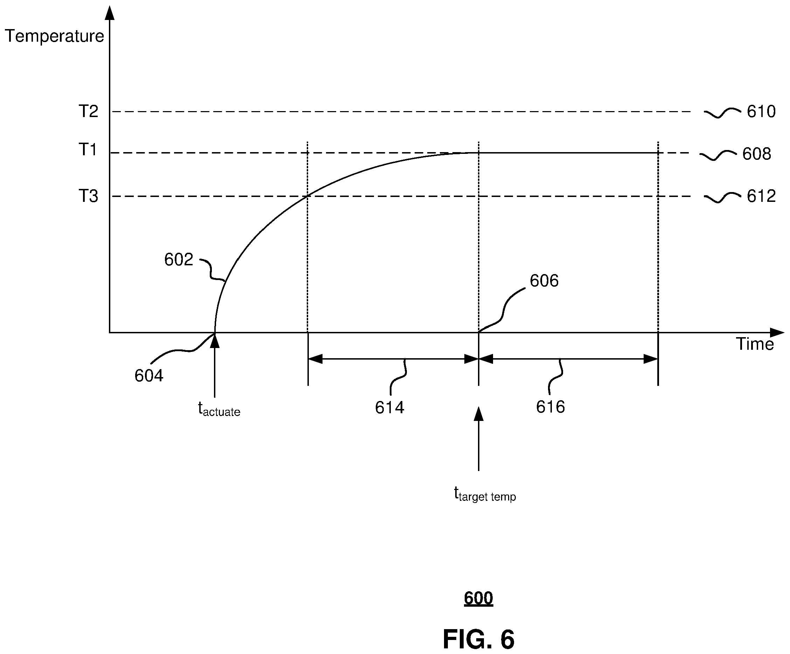

Referring to figure 6, there is shown a graph 600 of a variation with time, or build platform position, of the temperature of a wall of the build chamber at a predetermined point corresponding to a respective zone or volume of the build chamber as a consequence of activating one or more than one thermal element associated with that zone or volume. The zone or volume can be any one or more than one of the above-described zones or volumes 220 to 226. The variation in temperature of the wall at the predetermined point, in response to the activated one or more than one thermal element, has a respective rise time or profile 602. Therefore, when the build platform 120 reaches a particular point in time, or a particular position, 604, relative to a forthcoming zone or volume, one or more than one thermal element associated with that forthcoming zone or volume is actuated or otherwise activated to start heating the build material within that upper portion 160 or 536 of the build chamber 110.

A respective period of time later, or at a respective build platform position 606, the build material within the upper portion 160 or 536 of the build chamber 110 will have reached a target temperature (T1) 608. The target temperature 608 can be selected to achieve or meet a predetermined criterion or objective. For example, the target temperature 608 can be selected so that the build material within the upper portion 160 or 536 of the build chamber 110 has a particular relationship with a respective threshold temperature (T2) 610. The respective threshold temperature 610 can be a temperature below which the unfused supply build material 502 in the lower chamber or portion 160 or 538 of the build chamber 110 is not adversely affected. Alternatively, or additionally, the respective threshold temperature 610 can be a temperature to which the unfused supply build material 502 in the lower chamber or portion 160 or 538 can be exposed without degrading, or otherwise adversely affecting, the unfused supply build material. The exposure can be for a particular period of time, or for a particular range of times. For example, the unfused supply build material can have an associated heat capacity threshold below which the unfused supply build material can absorb heat, for a respective period of time, without degrading or being otherwise adversely affected. Reaching that heat capacity threshold will be a function of time and temperature.

For example, the build material 502 within the lower portion 160 or 538 of the build chamber 110 can degrade when exposed to temperatures that exceed a predetermined threshold, or that exceed a further predetermined temperature (T3) 612 for more than a predetermined period of time 614. Example implementations can be realised in which the further predetermined threshold 612 and the predetermined period of time 614 are selected so that the unfused supply build material in the lower portion 160 or 538 of the build chamber 110 is not adversely affected.

Alternatively, or additionally, build material within the lower portion 160 or 538 of the build chamber 110 can encounter flowability issues, that is, assume a state in which the build material within the lower portion 160 or 538 of the build chamber 110 cannot be moved or transported as readily as unfused supply build material under temperatures that do not exceed the predetermined threshold and/or temperature exposure durations at which flowability issues arise. Therefore, at least one, or both, of the above thresholds 610 or 612 can relate to temperatures for mitigating adverse effects of temperature on such flowability.

At least one, or both, of the target temperature 608 or duration 616 under that target temperature can be selected or set according to at least one criterion. Example implementations can be realised in which the at least one criterion is associated with at least one, or both, of dimensional stability or dimensional accuracy. Alternatively, or additionally, example implementations can be realised in which the at least one criterion is associated with at least a mechanical property. For example, the temperature of the fused build material within a respective zone or volume can be selected to realise a predetermined cooling rate of at least one, or both, of the fused or unfused material in the cake, that is, in the upper portion 536 of the build chamber 110. Example implementations can be realised in which the target temperature 608 is selected to maintain the fused build material at or above a respective crystalisation temperature of that fused build material for a predetermined period of time.

Example implementations can be realised in which the target temperature is associated with a type of build material used. For example, a given type of build material, such as, for example, PA11, may have a respective target temperature such as, for example, 185C or some other target temperature. Another, different, type of build material, such as, for example, PA12 may have a different target temperature such as, for example, 150C or some other target temperature.

Example implementations can have the effect of more closely managing at least one, or both, of the thermal conditions and power consumption within the printer 100. For example, heating just those zones or volumes containing fused build material, that is, portions of the 3D object under construction, reduces power consumption because power is not expended heating unfused supply build material disposed within the lower portion 162 or 538 of the build chamber 110. Alternatively, or additionally, by activating selected the thermal elements in zones or volumes of interest, thermally induced stresses in mechanical parts of the printer 100 can be reduced.

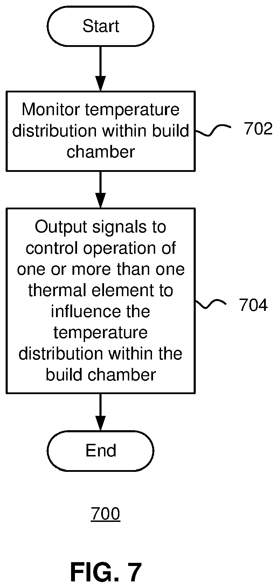

Referring to figure 7, there is shown a flowchart 700 for controlling at least one predetermined characteristic of the build chamber 110 or 202 according to example implementations. In an example implementation, the predetermined characteristic is temperature. At 702, a temperature within the build chamber 110 or 202 is sensed by one or more than one sensor. The one or more than one sensor can be any one or more of the sensors described herein such as, for example, sensors 310 and 312. At 704, one or more than one thermal element is controlled or otherwise operated to influence the temperature within the build chamber 110 or 202. The processing and control represented in the flowchart 700 can be implemented via machine executable instructions for execution by at least one processor. The at least one processor can comprise the controller 314 or some other processor or controller such as, for example, the above-described controller 156.

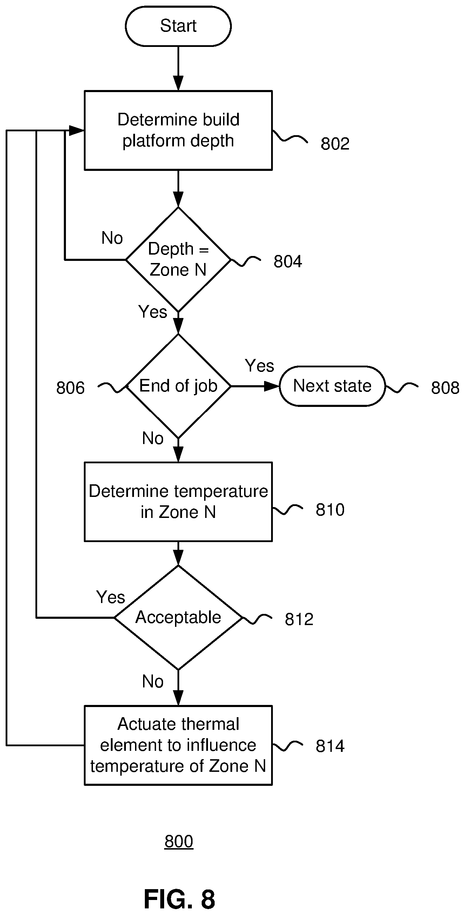

Referring to figure 8, there is shown a flowchart 800 for controlling at least the temperature within the build chamber 110 or 202 according to example implementations. At 802, the depth of the build platform 120 or 230 is determined. A determination is made at 804 regarding the position of the build platform within a current zone or volume, or whether or not the build platform is within a predetermined time in advance of entering a forthcoming zone or volume or at a predetermined position relative to a forthcoming zone or volume, or whether or not the build platform has entered a specific zone. If the determination at 804 is positive, a determination is made, at 806, regarding whether or not a current print job has finished. If the determination at 806 is positive, printing terminates and controlling the temperature within the build chamber enters a next state or stage at 808. The next state or stage can implement, for example, a progressive or controlled cool down that aims to control or reduce the temperature of the 3D printed object in a predetermined manner. Alternatively, or additionally, the next state or stage can comprise terminating the print job.

However, if the determination at 806 is negative, the current temperature within the current zone within which the build platform 120 resides is determined at 810. It is determined, at 812, whether or not the current temperature is acceptable. If the determination at 812 is positive, control returns to 802. However, if the determination at 812 is negative, one or more than one thermal element associated with the current zone within which the build platform 120 resides, or associated with a forthcoming zone or volume, is actuated to influence the temperature within the current zone or that forthcoming zone or volume. Thereafter, control returns to 802.

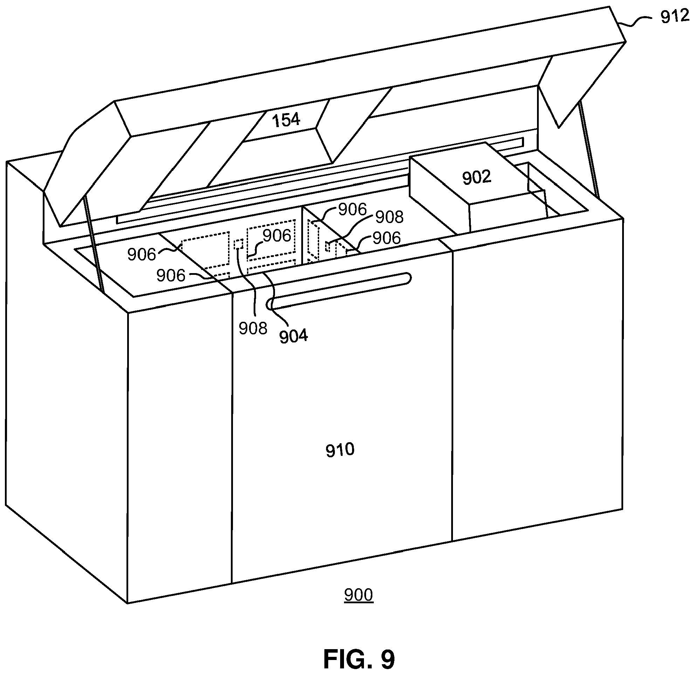

Referring to figure 9, there is shown a view of a 3D printer 900. The printer 900 is an example of the above-described printer 100. The printer 900 comprises a printer carriage 902 and a build chamber 904. The build chamber 904 is an example of the above described build chambers 110 and 202. The build chamber 904 comprises a plurality of thermal elements 906. The build chamber 904 also comprises a number of sensors 908 associated with the thermal elements. The build chamber 904 can form part of a removable build unit 910. The build unit 910 is an example of the above described build unit 109. However, alternatively, the build unit 910 can be fixed, that is, it can be an integral part of the printer 900. The printer 900 comprises a lid 912. The lid bears a heater such as the lamp 154 described above with reference to figure 1. The printer 900 is operable according to any flowchart, method or technique described herein.

Example implementations of the system 100 can be realised in the form of machine-executable instructions arranged, when executed by a machine, to implement any or all aspects, processes, activities or flowcharts, taken jointly and severally in any and all permutations, described in this application. It will be appreciated that circuitry as used herein can comprise one or more than one of physical electronic circuitry, software, hardware, application specific integrated circuitry or FPGAs, taken jointly or severally in any and all permutations.

Therefore, implementations also provide machine-readable storage storing such machine-executable instructions. The machine-readable storage can comprise transitory or non-transitory machine-readable storage. The machine can comprise one or more processors, or other circuitry, for executing the instructions or implementing the instructions.

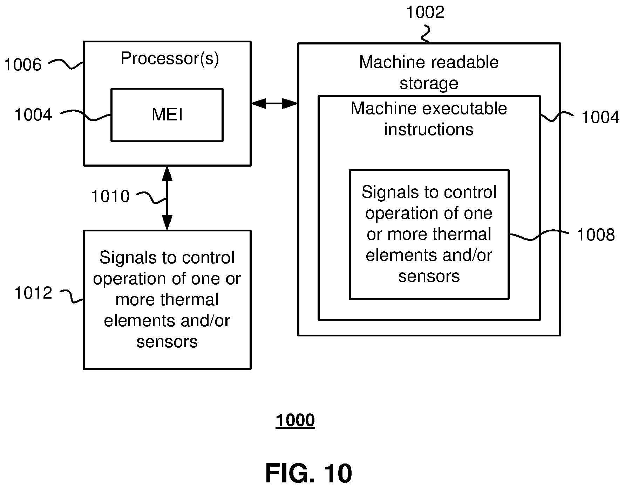

Accordingly, referring to figure 10, there is shown a view 1000 of implementations of at least one, or both, of machine-executable instructions or machine-readable storage. Figure 10 shows machine-readable storage 1002. The machine-readable storage 1002 can be realised using any type of volatile or non-volatile storage such as, for example, memory, a ROM, RAM, EEPROM, or other electrical storage, or magnetic or optical storage or the like. The machine-readable storage 1002 can be transitory or non-transitory. The machine-readable storage 1002 stores machine-executable instructions (MEIs) 1004. The MEls 1004 comprise instructions that are executable by a processor or other instruction execution, or instruction implementation, circuitry 1006. The processor or other circuitry 1006 is responsive to executing or implementing the MEls 1004 to perform any and all activities, processes, operations or methods described, illustrated and/or claimed in this application. Example implementations of the MIEs 1004 comprise machine-executable instructions 1008 for controlling at least one, or both, of one or more than one thermal element of the thermal elements described herein or one or more than one sensor described herein.

The controller 156 or 314 can be an implementation of the foregoing processor or other circuitry 1006 for executing any such MEls 1004.

## Claims

1. An additive manufacturing system (100) for manufacturing a 3D object from a build material;
the system (100) comprising a build chamber (110) having a build platform (120) for supporting a build material bed (115), the build chamber (110) divided by the build platform (120) into an upper portion (160) including the build material bed and a lower portion (162) for storing unfused supply build material;
the build chamber (110) having a plurality of walls, at least one wall of the plurality of walls bearing, or being associated with, two or more thermal elements (174), (176), (178), (180), responsive to respective control signals, to influence the temperature of the upper portion (160) of the build chamber (110);
the two or more thermal elements (174), (176), (178), (180) being disposed in a direction of an axis of movement of the build platform (120).

2. The system (100) of claim 1, in which at least two walls of the plurality of walls bear, or are associated with, two or more thermal elements (174), (176), (178), (180), responsive to respective signals, to influence the temperature of the upper portion (160) of the build chamber (110).

3. The system (100) of claim 2, in which said at least two walls of the plurality of walls comprises at least four walls bearing, or being associated with, two or more thermal elements (174), (176), (178), (180), responsive to respective control signals, to influence the temperature of the upper portion (160) of the build chamber (110).

4. The system (100) of any of claims 1 to 3, in which said two or more thermal elements (174), (176), (178), (180), responsive to respective control signals, to influence the temperature of the upper portion (160) of the build chamber (110) comprise at least one thermal element (174) arranged to influence the temperature of a respective region of the build chamber and at least one further thermal element (176) arranged to influence the temperature of at least one further respective region of the build chamber (110).

5. The system (100) of claim 4 in which said at least one thermal element (174) arranged to influence the temperature of a respective region of the build chamber (110) is arranged to establish a respective temperature within said respective region and said at least one further thermal element (176) arranged to influence the temperature of at least one further respective region of the build chamber (110) is arranged to establish a further respective temperature within said further respective region, said respective temperature being at least one of different to said further respective temperature or the same as said further respective temperature.

6. The system (100) of any of claims 1 to 5, in which said two or more thermal elements (174), (176), (178), (180), responsive to respective signals, to influence the temperature of the upper portion (160) of the build chamber (110) are operable to establish a predetermined or target temperature profile within the upper portion (160) of the build chamber (110).

7. The system (100) of claim 6, in which the predetermined or target temperature profile is a substantially uniform temperature throughout the upper portion (160) of the build chamber (110).

8. The system (100) of any of claims 1 to 7, in which said two or more thermal elements to influence the temperature of the build chamber (110) are responsive to one or more than one temperature sensor for monitoring temperature within the build chamber (110).

9. The system (100) of any of claims 1 to 8, in which the build platform (120) has at least one direction of movement and the two or more thermal elements (174), (176), (178), (180) are arranged relative to one another in said at least one direction of movement.

10. The system (100) of claim 9, in which the two or more thermal elements (174), (176), (178), (180) are at least one of arranged or operable in sets of thermal elements that define respective thermally controlled zones of the build chamber (110).

11. The system (100) of any of claims 1 to 10, in which the two or more thermal elements, responsive to respective control signals, to influence the temperature of the upper portion (160) of the build chamber (110) are operable to realise a predetermined rate of cooling of the upper portion (160) of the build chamber (110).

12. The system (100) of any of claims 1 to 11, in which at least one thermal element (174) of the two or more thermal elements is operable to thermally influence the temperature of at least one, or both, of the build material bed (120) or build chamber (110) concurrently with at least one other thermal element (176) of the two or more thermal elements not being operated to thermally influence the temperature of at least one, or both, of the build chamber (110) or unfused supply build material.

13. Machine-readable storage storing machine-executable instructions arranged, when executed, to control an additive manufacturing system (100) having a build chamber (110) comprising a build platform (120) for supporting a build material bed, the build chamber (110) divided by the build platform (120) into an upper portion (160) including the build material bed and a lower portion (162) for storing unfused supply build material; the build chamber (110) having a plurality of walls, at least one wall of the plurality of walls bearing, or being associated with, two or more thermal elements (174), (176), (178), (180), responsive to respective control signals, to influence the temperature of the upper portion (160) of the build chamber (110); wherein the build platform (120) has at least one direction of movement and the two or more thermal elements are arranged relative to one another in said at least one direction of movement; the machine-executable instructions comprising:
a. instructions for controlling said respective control signals to said two or more thermal elements to influence the temperature of the upper portion (160) of the build chamber (110).

14. Machine readable storage of claim 13, storing the machine-executable instructions for controlling said respective control signals to said two or more thermal elements to influence the temperature of the upper portion (160) of the build chamber (110) in response to at least one of build platform (120) position or build chamber temperature.

## Patentansprüche

1. Additivfertigungssystem (100) zum Fertigen eines 3D-Objekts aus einem Baumaterial;
wobei das System (100) eine Baukammer (110), die eine Bauplattform (120) zum Stützen eines Baumaterialbetts (115) aufweist, umfasst, wobei die Baukammer (110) durch die Bauplattform (120) in einen oberen Abschnitt (160), der das Baumaterialbett einschließt, und einen unteren Abschnitt (162) zum Speichern von nicht verschmolzenem Zufuhrbaumaterial unterteilt;
wobei die Baukammer (110) eine Vielzahl von Wänden aufweist, wobei mindestens eine Wand der Vielzahl von Wänden zwei oder mehr Thermoelemente (174), (176), (178), (180), die auf jeweilige Steuersignale reagieren, trägt oder ihnen zugeordnet ist, um die Temperatur des oberen Abschnitts (160) der Baukammer (110) zu beeinflussen;
wobei die zwei oder mehr Thermoelemente (174), (176), (178), (180) in einer Richtung einer Bewegungsachse der Bauplattform (120) angeordnet sind.

2. System (100) nach Anspruch 1, wobei mindestens zwei Wände der Vielzahl von Wänden zwei oder mehr Thermoelemente (174), (176), (178), (180), die auf jeweilige Signale reagieren, tragen oder ihnen zugeordnet sind, um die Temperatur des oberen Abschnitts (160) der Baukammer (110) zu beeinflussen.

3. System (100) nach Anspruch 2, wobei die mindestens zwei Wände der Vielzahl von Wänden mindestens vier Wände umfassen, die zwei oder mehr Thermoelemente (174), (176), (178), (180), die auf jeweilige Steuersignale reagieren, tragen oder ihnen zugeordnet sind, um die Temperatur des oberen Abschnitts (160) der Baukammer (110) zu beeinflussen.

4. System (100) nach einem der Ansprüche 1 bis 3, wobei die zwei oder mehr Thermoelemente (174), (176), (178), (180), die auf jeweilige Steuersignale reagieren, um die Temperatur des oberen Abschnitts (160) der Baukammer (110) zu beeinflussen, mindestens ein Thermoelement (174), das angeordnet ist, um die Temperatur eines jeweiligen Bereichs der Baukammer zu beeinflussen, und mindestens ein weiteres Thermoelement (176), das angeordnet ist, um die Temperatur mindestens eines weiteren jeweiligen Bereichs der Baukammer (110) zu beeinflussen, umfassen.

5. System (100) nach Anspruch 4, wobei das mindestens eine Thermoelement (174), das angeordnet ist, um die Temperatur eines jeweiligen Bereichs der Baukammer (110) zu beeinflussen, angeordnet ist, um eine jeweilige Temperatur innerhalb des jeweiligen Bereichs herzustellen, und wobei das mindestens eine weitere Thermoelement (176), das angeordnet ist, um die Temperatur mindestens eines weiteren jeweiligen Bereichs der Baukammer (110) zu beeinflussen, angeordnet ist, um eine weitere jeweilige Temperatur innerhalb des weiteren jeweiligen Bereichs herzustellen, wobei die jeweilige Temperatur mindestens eines von unterschiedlich zu der weiteren jeweiligen Temperatur oder gleich wie die weitere jeweilige Temperatur ist.

6. System (100) nach einem der Ansprüche 1 bis 5, wobei die zwei oder mehr Thermoelemente (174), (176), (178), (180), die auf jeweilige Steuersignale reagieren, um die Temperatur des oberen Abschnitts (160) der Baukammer (110) zu beeinflussen, betriebsfähig sind, um ein vorbestimmtes oder Zieltemperaturprofil innerhalb des oberen Abschnitts (160) der Baukammer (110) herzustellen.

7. System (100) nach Anspruch 6, wobei das vorbestimmte oder Zieltemperaturprofil eine im Wesentlichen gleichmäßige Temperatur in dem gesamten oberen Abschnitt (160) der Baukammer (110) ist.

8. System (100) nach einem der Ansprüche 1 bis 7, wobei die zwei oder mehr Thermoelemente, um die Temperatur der Baukammer (110) zu beeinflussen, auf einen oder mehr als einen Temperatursensor zum Überwachen der Temperatur innerhalb der Baukammer (110) reagieren.

9. System (100) nach einem der Ansprüche 1 bis 8, wobei die Bauplattform (120) mindestens eine Bewegungsrichtung aufweist und die zwei oder mehr Thermoelemente (174), (176), (178), (180) in der mindestens einen Bewegungsrichtung relativ zueinander angeordnet sind.

10. System (100) nach Anspruch 9, wobei die zwei oder mehr Thermoelemente (174), (176), (178), (180) in Sätzen von Thermoelementen, die jeweilige thermisch gesteuerte Zonen der Baukammer (110) definieren, angeordnet oder betriebsfähig sind.

11. System (100) nach einem der Ansprüche 1 bis 10, wobei die zwei oder mehr Thermoelemente, die auf jeweilige Steuersignale reagieren, um die Temperatur des oberen Abschnitts (160) der Baukammer (110) zu beeinflussen, betriebsfähig sind, um eine vorbestimmte Abkühlungsrate des oberen Abschnitts (160) der Baukammer (110) zu realisieren.

12. System (100) nach einem der Ansprüche 1 bis 11, wobei mindestens ein Thermoelement (174) der zwei oder mehr Thermoelemente betriebsfähig ist, um die Temperatur mindestens eines oder beider des Baumaterialbetts (120) oder der Baukammer (110) gleichzeitig mit mindestens einem anderen Thermoelement (176) der zwei oder mehr Thermoelemente zu beeinflussen, die nicht betrieben werden, um die Temperatur von mindestens einem oder beiden der Baukammer (110) oder des nicht verschmolzenem Zufuhrbaumaterials thermisch zu beeinflussen.

13. Maschinenlesbarer Speicher, der maschinenausführbare Anweisungen speichert, die, wenn sie ausgeführt werden, angeordnet sind, um ein Additivfertigungssystem (100), das eine Baukammer (110) aufweist, die eine Bauplattform (120) zum Stützen eines Baumaterialbetts umfasst, zu steuern, wobei die Baukammer (110) durch die Bauplattform (120) in einen oberen Abschnitt (160), der das Baumaterialbett einschließt, und einen unteren Abschnitt (162) zum Speichern von nicht verschmolzenem Zufuhrbaumaterial unterteilt ist; wobei die Baukammer (110) eine Vielzahl von Wänden aufweist, wobei mindestens eine Wand der Vielzahl von Wänden zwei oder mehr Thermoelemente (174), (176), (178), (180), die auf jeweilige Steuersignale reagieren, trägt oder ihnen zugeordnet ist, um die Temperatur des oberen Abschnitts (160) der Baukammer (110) zu beeinflussen; wobei die Bauplattform (120) mindestens eine Bewegungsrichtung aufweist und die zwei oder mehr Thermoelemente in der mindestens einen Bewegungsrichtung relativ zueinander angeordnet sind; wobei die maschinenausführbaren Anweisungen umfassen:
a. Anweisungen zum Steuern der jeweiligen Steuersignale an die zwei oder mehr Thermoelemente, um die Temperatur des oberen Abschnitts (160) der Baukammer (110) zu beeinflussen.

14. Maschinenlesbarer Speicher nach Anspruch 13, der die maschinenausführbaren Anweisungen zum Steuern der jeweiligen Steuersignale an die zwei oder mehr Thermoelemente speichert, um die Temperatur des oberen Abschnitts (160) der Baukammer (110) als Reaktion auf mindestens eines von einer Position einer Bauplattform (120) oder einer Baukammertemperatur zu beeinflussen.

## Revendications

1. Système de fabrication additive (100) pour fabriquer un objet 3D à partir d'un matériau de construction ;
le système (100) comprenant une chambre de construction (110) ayant une plate-forme de construction (120) pour supporter un lit de matériau de construction (115), la chambre de construction (110) étant divisée par la plate-forme de construction (120) en une partie supérieure (160) comprenant le lit de matériau de construction et une partie inférieure (162) pour stocker un matériau de construction d'alimentation non fondu ;
la chambre de construction (110) ayant une pluralité de parois, au moins une paroi de la pluralité de parois portant, ou étant associée à, deux éléments thermiques ou plus (174), (176), (178), (180), en réponse à des signaux de commande respectifs, pour influencer la température de la partie supérieure (160) de la chambre de construction (110) ;
les deux éléments thermiques ou plus (174), (176), (178), (180) étant disposés dans une direction d'un axe de mouvement de la plate-forme de construction (120).

2. Système (100) selon la revendication 1, dans lequel au moins deux parois de la pluralité de parois portent, ou sont associées à, deux éléments thermiques ou plus (174), (176), (178), (180), en réponse à des signaux respectifs, pour influencer la température de la partie supérieure (160) de la chambre de construction (110).

3. Système (100) selon la revendication 2, dans lequel lesdites au moins deux parois de la pluralité de parois comprend au moins quatre parois portant, ou étant associées à, deux éléments thermiques ou plus (174), (176), (178), (180), en réponse à des signaux de commande respectifs, pour influencer la température de la partie supérieure (160) de la chambre de construction (110).

4. Système (100) selon l'une quelconque des revendications 1 à 3, dans lequel lesdits deux éléments thermiques ou plus (174), (176), (178), (180), en réponse à des signaux de commande respectifs, pour influencer la température de la partie supérieure (160) de la chambre de construction (110) comprennent au moins un élément thermique (174) conçu pour influencer la température d'une région respective de la chambre de construction et au moins un autre élément thermique (176) conçu pour influencer la température d'au moins une autre région respective de la chambre de construction (110).

5. Système (100) selon la revendication 4 dans lequel ledit au moins un élément thermique (174) conçu pour influencer la température d'une région respective de la chambre de construction (110) est conçu pour établir une température respective au sein de ladite région respective et ledit au moins un autre élément thermique (176) conçu pour influencer la température d'au moins une autre région respective de la chambre de construction (110) est conçu pour établir une autre température respective au sein de ladite autre région respective, ladite température respective étant différente de ladite autre température respective et/ou identique à ladite autre température respective.

6. Système (100) selon l'une quelconque des revendications 1 à 5, dans lequel lesdits deux éléments thermiques ou plus (174), (176), (178), (180), en réponse à des signaux respectifs, pour influencer la température de la partie supérieure (160) de la chambre de construction (110) sont exploitables pour établir un profil de température prédéterminé ou cible à l'intérieur de la partie supérieure (160) de la chambre de construction (110).

7. Système (100) selon la revendication 6, dans lequel le profil de température prédéterminé ou cible est une température sensiblement uniforme sur toute la partie supérieure (160) de la chambre de construction (110).

8. Système (100) selon l'une quelconque des revendications 1 à 7, dans lequel lesdits deux éléments thermiques ou plus pourinfluencer la température de la chambre de construction (110) sont sensibles à un ou plusieurs capteurs de température pour surveiller la température au sein de la chambre de construction (110).

9. Système (100) selon l'une quelconque des revendications 1 à 8, dans lequel la plate-forme de construction (120) a au moins une direction de mouvement et les deux éléments thermiques ou plus (174), (176), (178), (180) sont agencés l'un par rapport à l'autre dans ladite au moins une direction de mouvement.

10. Système (100) selon la revendication 9, dans lequel les deux éléments thermiques ou plus (174), (176), (178), (180) sont agencés et/ou exploitables dans des ensembles d'éléments thermiques qui définissent des zones thermiquement commandées respectives de la chambre de construction (110).

11. Système (100) selon l'une quelconque des revendications 1 à 10, dans lequel les deux éléments thermiques ou plus, en réponse à des signaux de commande respectifs, pour influencer la température de la partie supérieure (160) de la chambre de construction (110) sont exploitables pour réaliser une vitesse de refroidissement prédéterminée de la partie supérieure (160) de la chambre de construction (110).

12. Système (100) selon l'une quelconque des revendications 1 à 11, dans lequel au moins un élément thermique (174) des deux éléments thermiques ou plus est exploitable pour influencer thermiquement la température d'au moins un, ou les deux, parmi le lit de matériau de construction (120) ou la chambre de construction (110) simultanément, au moins un autre élément thermique (176) des deux éléments thermiques ou plus n'étant pas exploité pour influencer thermiquement la température d'au moins un, ou les deux, parmi la chambre de construction (110) et le matériau de construction d'alimentation non fondu.

13. Stockage lisible par machine stockant des instructions exécutables par machine conçues, lorsqu'elles sont exécutées, pour commander un système de fabrication additive (100) ayant une chambre de construction (110) comprenant une plate-forme de construction (120) pour supporter un lit de matériau de construction, la chambre de construction (110) étant divisée par la plate-forme de construction (120) en une partie supérieure (160) comprenant le lit de matériau de construction et une partie inférieure (162) pour stocker un matériau de construction d'alimentation non fondu ; la chambre de construction (110) ayant une pluralité de parois, au moins une paroi de la pluralité de parois portant, ou étant associée à, deux éléments thermiques ou plus (174), (176), (178), (180), en réponse à des signaux de commande respectifs, pour influencer la température de la partie supérieure (160) de la chambre de construction (110) ; dans lequel la plate-forme de construction (120) a au moins une direction de mouvement et les deux éléments thermiques ou plus sont agencés l'un par rapport à l'autre dans ladite au moins une direction de mouvement ; les instructions exécutables par machine comprenant :
a. des instructions pour commander lesdits signaux de commande respectifs vers lesdits deux éléments thermiques ou plus pour influencer la température de la partie supérieure (160) de la chambre de construction (110).

14. Stockage lisible par machine selon la revendication 13, stockant les instructions exécutables par machine pour commander lesdits signaux de commande respectifs vers lesdits deux éléments thermiques ou plus pour influencer la température de la partie supérieure (160) de la chambre de construction (110) en réponse à au moins l'une parmi une position de plate-forme de construction (120) et une température de chambre de construction.
